(19) Europäisches Patentamt
European Patent Office
Office européen des brevets

(11) **EP 2 854 105 A1**

(12) **EUROPEAN PATENT APPLICATION**
published in accordance with Art. 153(4) EPC

(43) Date of publication:
01.04.2015 Bulletin 2015/14

(51) Int Cl.:
*G06T 7/00* *(2006.01)* *G06T 1/00* *(2006.01)*
*G08B 13/196* *(2006.01)* *H04N 7/18* *(2006.01)*

(21) Application number: 13793699.3

(22) Date of filing: 22.05.2013

(86) International application number:
**PCT/JP2013/003269**

(87) International publication number:
**WO 2013/175792 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.05.2012 JP 2012117129**

(71) Applicant: **Panasonic Corporation**
**Kadoma-shi, Osaka 571-8501 (JP)**

(72) Inventors:
• **NISHIMURA, Jun**
**Osaka 540-6207 (JP)**

• **YOSHIO, Hiroaki**
**Osaka 540-6207 (JP)**
• **YAMADA, Shin**
**Osaka 540-6207 (JP)**
• **MATSUKAWA, Takayuki**
**Osaka 540-6207 (JP)**

(74) Representative: **Eisenführ Speiser**
**Patentanwälte Rechtsanwälte PartGmbB**
**Postfach 10 60 78**
**28060 Bremen (DE)**

(54) **PERSON ATTRIBUTE ESTIMATION SYSTEM AND LEARNING-USE DATA GENERATION DEVICE**

(57) There is provided a person attribute estimation system capable of accurately estimating an attribute of a person according to an environment in which a person who is the target of attribute estimation is to be captured. The person attribute estimation system includes a camera (10), an attribute estimation unit (32) for estimating an attribute of a person shown in the image generated by the camera (10), by using an estimation model, a pseudo-site image generation unit (23) for generating a pseudo-site image by processing data of a standard image which is a person image according to image capturing environment data indicating an image capturing environment of the attribute estimation target person by the camera (10), and an estimation model relearning unit (25) for performing learning of the estimation model by using the pseudo-site image.

Figure 1

**Description**

Cross-Reference to Related Application

This application claims the benefit of Japanese Patent Application No. 2012-117129, filed May 23, 2012, the disclosure of which is incorporated herein by reference.

Technical Field

The present invention relates to a person attribute estimation system for estimating attributes (for example, age and sex) of a person from an image of the person, and a learning-use data generation device, and more particularly, to a person attribute estimation system for estimating attributes of a person by using an estimation model that is generated by learning, and a learning-use data generation device.

Background Art

Conventionally, a person attribute estimation system for capturing images of customers at near the entrance of a store such as a convenience store, for example, and for estimating the attributes of customers from the images to thereby analyze the customer base of the store is known. Such a person attribute estimation system is for detecting a face region of a subject from each frame image of a captured video, and estimating the attributes, such as age and sex, of a detected face, and a model for attribute estimation which is generated in advance is stored therein at the time of manufacturing or shipping.

For example, Patent Literature 1 discloses a technique of generating an attribute identification dictionary by performing learning, by a computer configuring an offline training system, of learning sample data associating data of a plurality of sample images each including a face image of a person whose attribute is known and the attribute of each person, the computer storing the attribute identification dictionary in advance, wherein the attribute identification dictionary is referred to and an attribute of a person captured by a connected camera is identified.

Citation List

Patent Literature

Patent Literature 1: Japanese Patent Laid-Open No. 2006-323507

Summary of Invention

Technical Problem

However, with a conventional technique as disclosed in Patent Literature 1, a sample image for learning use is captured in an environment different from an environment where a person who is an attribute estimation target is to be captured, that is, the environment of an actual installation location of a camera, and thus, the image capturing environment of an actual use site is not reflected in the estimation model that is generated by using such a sample image, and there is a problem that, in the actual use, it is difficult to accurately estimate the attribute of a person.

More specifically, generally, a plurality of learning-use sample images are images obtained by capturing the faces of persons from the front, under the same illuminance, for example. Accordingly, if the customers and the like are to be captured from the front, under the same illuminance as the illuminance mentioned above, the attribute of a person may be accurately estimated based on the estimation model generated based on the sample images, but the accuracy of attribute estimation may be reduced in the case of capturing the customers and the like from directions other than front, under illuminance different from the illuminance mentioned above.

To prevent such reduction in the accuracy, a method of taking out an image actually captured by a camera installed at a store or the like as a learning-use sample image, and re-generating an estimation model by associating the image with correct attribute data is effective. However, such a method requires burdensome tasks of capturing subjects of various attributes at the actual use site, and attaching correct attribute data for generating an estimation model to each one of a great number, the order of several thousands to several tens of thousands, of sample images.

The present invention is made in view of the problems described above, and has its object to provide a person attribute estimation system capable of accurately estimating an attribute of a person according to an environment in which a person who is the target of attribute estimation is to be captured, without requiring burdensome tasks, and a learning-use data generation device.

Solution to Problem

A person attribute estimation system includes a camera for capturing an attribute estimation target person, and generating an image, an attribute estimation unit for estimating an attribute of a person shown in the image generated by the camera, by using an estimation model, an image capturing environment data acquisition unit for acquiring image capturing environment data indicating an image capturing environment of the attribute estimation target person by the camera, a standard image acquisition unit for acquiring a standard image that is a person image, a pseudo-site image generation unit for generating a pseudo-site image reflecting the image capturing environment in the standard image by processing data of the standard image according to the image capturing environment data, and a learning unit for performing learning of the estimation model by using the pseudo-site image.

A learning-use data generation device is a learning-use data generation device for generating learning-use data to be used in learning of an estimation model, for attribute estimation for a person, which is to be used by a person attribute estimation system including a camera for capturing an attribute estimation target person and generating an image, and an attribute estimation unit for estimating an attribute of a person shown in the image generated by the camera, the learning-use data generation device including an image capturing environment data acquisition unit for acquiring image capturing environment data indicating an image capturing environment of the attribute estimation target person by the camera, a standard image acquisition unit for acquiring a standard image that is a person image, and a pseudo-site image generation unit for generating a pseudo-site image reflecting the image capturing environment in the standard image, by processing data of the standard image according to the image capturing environment data, wherein the learning-use data is generated by using the pseudo-site image or a pseudo-site image capturing image that is obtained by capturing a subject showing the pseudo-site image by the camera in an environment where the attribute estimation target person is to be captured by the camera.

As will be described below, the present invention includes other modes. Therefore, the disclosure of the invention intends to provide some modes of the present invention, and does not intend to limit the scope of the invention described and claimed herein.

Advantageous Effects of Invention

According to the present invention, a pseudo-site image is generated by processing data of a standard image according to an image capturing environment data, and generation of an estimation model for attribute estimation is performed by learning , using the pseudo-site image, and thus, accurate attribute estimation according to the actual image capturing environment is enabled.

Brief Description of Drawings

[Figure 1] Figure 1 is a block diagram showing a configuration of a person attribute estimation system according to a first embodiment of the present invention.

[Figure 2] Figure 2 is an operation flow diagram of the person attribute system according to the first embodiment of the present invention.

[Figure 3A] Figure 3A is a diagram showing an example of a camera installation state according to the first embodiment of the present invention.

[Figure 3B] Figure 3B is a diagram showing an example of an image captured by a camera according to the first embodiment of the present invention.

[Figure 4A] Figure 4A is a diagram showing an example of distribution of data of face orientation angles in a captured image according to the first embodiment of the present invention.

[Figure 4B] Figure 4B is a diagram showing an example of distribution of data of luminance contrast of a captured image according to the first embodiment of the present invention.

[Figure 5A] Figure 5A is a diagram showing an example of a standard image according to the first embodiment of the present invention.

[Figure 5B] Figure 5B is a diagram showing an example of the standard image according to the first embodiment of the present invention.

[Figure 5C] Figure 5C is a diagram showing an example of a pseudo-site image according to the first embodiment of the present invention.

[Figure 5D] Figure 5D is a diagram showing an example of the pseudo-site image according to the first embodiment of the present invention.

[Figure 6] Figure 6 is a block diagram showing a configuration of an attribute estimation unit according to the first embodiment of the present invention.

[Figure 7] Figure 7 is a diagram for describing transformation of a feature for attribute estimation according to the first embodiment of the present invention.

[Figure 8] Figure 8 is an operation flow diagram of an estimation model relearning unit according to the first embodiment of the present invention.

[Figure 9] Figure 9 is a block diagram showing a configuration of an image capturing environment estimation unit according to the first embodiment of the present invention.

[Figure 10] Figure 10 is a block diagram showing a configuration of a person attribute estimation system according to a second embodiment of the present invention.

[Figure 11] Figure 11 is a diagram for describing an example of association of a pseudo-site image capturing image and correct attribute data according to the second embodiment of the present invention.

[Figure 12] Figure 12 is a block diagram showing a configuration of an image capturing environment estimation unit according to the second embodiment of the present invention.

Description of Embodiments

Hereinafter, a detailed description of the present invention will be given. The embodiments described below are only examples of the present invention, and the present invention may be modified into various modes. Accordingly, specific configurations and functions disclosed below are not to limit the scope of the claims.

A person attribute estimation system according to an embodiment includes a camera for capturing an attribute estimation target person, and generating an image, an attribute estimation unit for estimating an attribute of a person shown in the image generated by the camera, by using an estimation model, an image capturing environment data acquisition unit for acquiring image capturing environment data indicating an image capturing environment of the attribute estimation target person by the camera, a standard image acquisition unit for acquiring a standard image that is a person image, a pseudo-site image generation unit for generating a pseudo-site image reflecting the image capturing environment in the standard image by processing data of the standard image according to the image capturing environment data, and a learning unit for performing learning of the estimation model by using the pseudo-site image.

According to this configuration, a pseudo-site image in which it is as if an image of a person is actually captured on site is generated based on image capturing environment data indicating in what image capturing environment a person who is an attribute estimation target is to be captured and a standard image, which is a person image, and an estimation model is learned by using this pseudo-site image. Accordingly, an accurate model for attribute estimation reflecting the image capturing environment, such as the state of a use site of a camera and the state of the camera, may be generated and used.

Also, in the person attribute estimation system described above, the learning unit may perform learning of the estimation model by using, as learning-use image data, a pseudo-site image capturing image that is obtained by capturing a subject showing the pseudo-site image by the camera in the image capturing environment of an attribute estimation target person by the camera.

According to this configuration, a subject showing a pseudo-site image that is generated based on a standard image is captured in a use site where an image of a person who is an attribute estimation target is to be captured or an environment assuming the same. Since an image captured in the above manner is used as a learning-use sample image for attribute estimation model generation, an accurate model for attribute estimation which even more reflects the actual image capturing environment, such as camera noise, may be generated and used.

Also, in the person attribute estimation system described above, the learning unit may perform learning of the estimation model by using, as learning-use image data, a pseudo-site image generated by the pseudo-site image generation unit.

According to this configuration, since a pseudo-site image generated based on a standard image is used as learning-use sample image for attribute estimation model generation, an accurate model for attribute estimation reflecting the actual image capturing environment may be easily generated and used.

Furthermore, in the person attribute estimation system described above, attribute data indicating an attribute of a person who is a subject may be associated with a standard image, and the learning unit may perform learning of the estimation model by using, as learning-use correct attribute data, the attribute data corresponding to the standard image used for generation of the pseudo-site image.

According to this configuration, learning of the estimation model is performed by using attribute data of the standard image as correct attribute data of the pseudo-site image or a pseudo-site image capturing image which is learning-use image data, and thus, association of learning-use image data and correct attribute data may be realized by a simple configuration, and learning of an attribute estimation model may be performed.

Furthermore, the person attribute estimation system described above may further include an image capturing environment estimation unit for calculating the image capturing environment data based on the image generated by the camera, and the image capturing environment data acquisition unit may acquire the image capturing environment data calculated by the image capturing environment estimation unit.

According to this configuration, image capturing environment data calculated based on an actual captured image is used for generation of a pseudo-site image to be used for learning of the estimation model, and thus, by capturing an image for calculation of the image capturing environment data in a use site, for example, an image capturing environment grasped based on the captured image may be reflected in the pseudo-site image and the estimation model.

Furthermore, in the person attribute estimation system described above, the image capturing environment data may include data indicating the illumination state of a location where an attribute estimation target person is to be captured by the camera, and the pseudo-site image generation unit may generate the pseudo-site image by transforming the standard image according to the data indicating the illumination state.

According to this configuration, since the pseudo-site image is generated by transforming the standard image according to the illumination state of the actual use site, an attribute estimation model reflecting the illumination state of a use site, which is a factor that influences the accuracy of attribute estimation, may be generated and used.

Furthermore, in the person attribute estimation system described above, the attribute estimation unit may be for estimating an attribute of a person appearing in the image generated by the camera based on a partial image of a face region in the image, the image capturing environment data may include data regarding the orientation of the face when an attribute estimation target person is captured by the camera, the standard image may be an image including the face of a person, and the pseudo-site image generation unit may generate the pseudo-site image by transforming the orientation of the face in the standard image according to the data regarding the orientation of the face.

According to this configuration, a standard image is transformed according to data regarding the orientation of the face as the image capturing environment data, and a pseudo-site image is generated. This data regarding the orientation of a face is data that is predicted as the face orientation of a person who is the attribute estimation target, and thus, an estimation model suitable for attribute estimation that is performed focusing on the face region of a person in a captured image may be generated and used.

Moreover, in the person attribute estimation system described above, the image capturing environment data may be image capturing environment data for each of one or more representative person detection regions in the image generated by the camera.

According to this configuration, since a pseudo-site image is generated by using image capturing environment data regarding a representative person detection region, an estimation model reflecting the image capturing environment data in a way suitable for actual attribute estimation may be generated and used. Additionally, a representative person detection region is a partial region in a captured image where an attribute estimation target person is expected to be detected.

Moreover, in the person attribute estimation system described above, the pseudo-site image generation unit may generate a pseudo-site image for each of the representative person detection regions by using image capturing environment data for each of the representative person detection regions, the learning unit may perform learning of the estimation model for each of the representative person detection regions, and the attribute estimation unit may estimate an attribute of a person by selecting an estimation model according to the detection position of a person shown in the image generated by the camera.

According to this configuration, in the case where there is a plurality of representative person detection regions where an attribute estimation target person is expected to be detected, a pseudo-site image and an estimation model for each region are generated by using the image capturing environment data for each representative person detection region. Then, a corresponding estimation model is used at the time of person attribute estimation according to in which representative person detection region (or a position nearby) a target person is shown. When there is a plurality of representative person detection regions, the image capturing environment data may be reflected differently in each region, and thus, attribute estimation may be more accurately performed by this configuration.

A learning-use data generation device according to an embodiment is a learning-use data generation device for generating learning-use data to be used in learning of an estimation model, for attribute estimation for a person, which is to be used by a person attribute estimation system including a camera for capturing an attribute estimation target person, and generating an image, and an attribute estimation unit for estimating an attribute of a person shown in the image generated by the camera, the learning-use data generation device including an image capturing environment data acquisition unit for acquiring image capturing environment data indicating an image capturing environment of the attribute estimation target person by the camera, a standard image acquisition unit for acquiring a standard image that is a person image, and a pseudo-site image generation unit for generating a pseudo-site image reflecting the image capturing environment in the standard image, by processing data of the standard image according to the image capturing environment data, wherein the learning-use data is generated by using the pseudo-site image or a pseudo-site image capturing image that is obtained by capturing a subject showing the pseudo-site image by the camera in an environment where the attribute estimation target person is to be captured by the camera.

According to this configuration, a pseudo-site image in which it is as if an image of a person is actually captured on site is generated based on image capturing environment data indicating in what image capturing environment a person who is an attribute estimation target is to be captured and a standard image. Then, image data for learning an attribute estimation model is generated by using this pseudo-site image or the pseudo-site image capturing image in which the pseudo-site image is captured in a use site environment, and thus, learning-use data for generation of an accurate model reflecting the state of a use site of a camera and the state of the camera, for example, may be generated.

Moreover, in the learning-use data generation device described above, the learning-use data may include the pseudo-site image or the pseudo-site image capturing image which is learning-use image data, and attribute data that is correct attribute data for learning-use and that is associated with the standard image that was used in generation of the pseudo-site image.

According to this configuration, the pseudo-site image or the pseudo-site image capturing image is given as the learning-use image data, and attribute data corresponding to the standard image that was used in generation of the pseudo-site image is given as the learning-use correct data, and thus, the learning-use data may be easily generated.

In the following, the person attribute estimation system and the learning-use data generation device will be described with reference to the drawings. In the embodiment below, a case of estimating the age (age group) and the sex of a person as the attributes of the person will be described.

(First Embodiment)

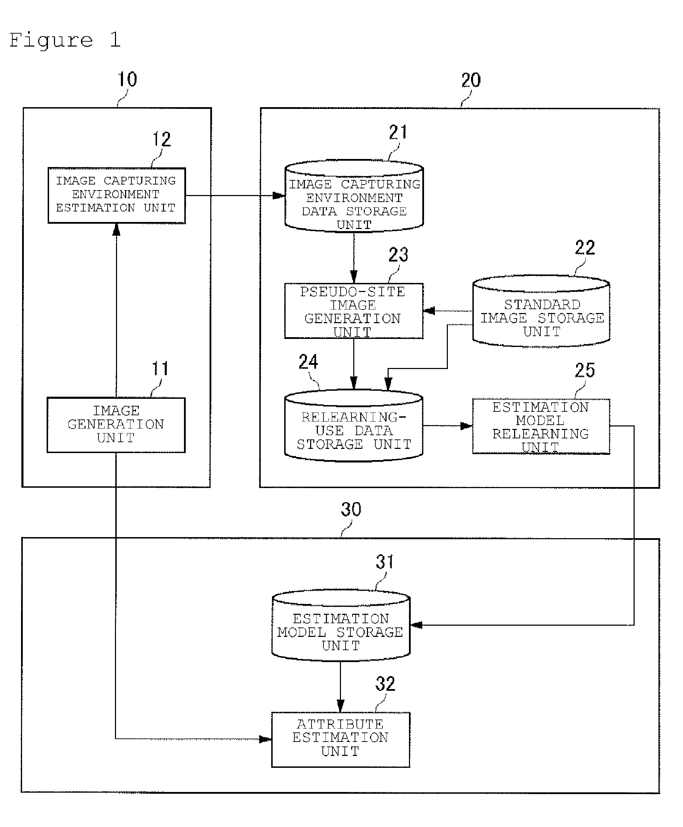

Figure 1 is a diagram showing a configuration of a person attribute estimation system of a first embodiment. A person attribute estimation system 1 includes a camera 10, a relearning control system 20, and a person attribute estimation device 30. The camera 10, the relearning control system 20, and the person attribute estimation device 30 each include a communication unit, not shown, and are connected with one another. Additionally, the relearning control system 20 is realized by a server on a network or a server group, and forms a cloud computing system together with the person attribute estimation device 30.

The camera 10 captures a person who is the target of attribute estimation. The person attribute estimation device 30 estimates the attribute of the person captured by the camera 10 based on the image of a face region. The relearning control system 20 updates, by relearning, an estimation model that is used by the person attribute estimation device 30 at the time of estimating the attribute of the person captured by the camera 10, and provides the same to the person attribute estimation device 30.

The camera 10 is installed so as to capture a location where an unspecific large number of persons whose age groups and sexes are to be estimated (persons who are attribute estimation targets) are to pass. For example, the camera 10 is installed at a high position in a store so as to capture the faces of customers entering from the entrance of the store. Accordingly, the face of a person who is an attribute estimation target is not necessarily captured by the camera 10 from the front. Furthermore, the illumination state such as the illumination at the time of capturing or the state of the natural light (the direction of the light source, the illuminance, etc.) may also change depending on the position of installation of the camera 10, the time of capturing, and the like. That is, if the use site where the camera 10 is to be installed is different, the environment of capturing of the image of a person who is the target of attribute estimation is also different.

The camera 10 includes an image generation unit 11, and an image capturing environment estimation unit 12. Of these, the image generation unit 11 generates sequential frame images as a video. A still image may alternatively be generated at each image capturing that is performed at a predetermined interval. An image generated in this manner is provided to the person attribute estimation device 30 in the case of actually performing estimation of a person attribute, and is output to the image capturing environment estimation unit 12 in the case of generating a model for person attribute estimation.

The image capturing environment estimation unit 12 estimates the image capturing environment of a person by the camera 10, and calculates data indicating the image capturing environment. Here, the image capturing environment refers to the state of the camera 10 itself or of the surroundings of the camera 10 that may influence the content of an image that is generated, such as the orientation of the face of a person to be captured, the luminance contrast of the face image captured, and the like. For example, the image capturing environment is the installation position of the camera (the height of installation of the camera, the lens direction, etc.), the state of the illumination around the camera at the time of image capturing or of the natural light (the direction of the light source, the illuminance, etc.), or the like. Such an image capturing environment may be reflected in a captured image, and thus, in the present embodiment, data for estimation of the image capturing environment is calculated based on a captured image. Specifically, in the present embodiment, data for estimation of the image capturing environment is data regarding the distribution of face orientation angles (upward/downward, left/right) of a person in a generated image, and the luminance contrast distribution in a face region. The calculated data is provided to the relearning control system 20 as the image capturing environment data.

The relearning control system 20 includes an image capturing environment data storage unit 21, a standard image storage unit 22, a pseudo-site image generation unit 23, a relearning-use data storage unit 24, and an estimation model relearning unit 25. These may all be provided to one server, or may be separately provided to a plurality of servers connected on a network.

The image capturing environment data storage unit 21 stores the image capturing environment data calculated by the image capturing environment estimation unit of the camera 10, which is data indicating the image capturing environment. The standard image storage unit 22 stores a plurality of face images each being associated with an attribute value as a correct value. In the present embodiment, the attribute values that are the estimation targets are age group and sex, and thus, the attribute values associated as the correct values also include age group (age) and sex. A standard image stored in the standard image storage unit 22 may be commonly provided to cameras 10 installed at different use sites. Accordingly, the plurality of face images stored as the standard images may be images obtained by capturing a person from the front in a place other than the installation location of the camera 10, such as a laboratory.

The pseudo-site image generation unit 23 reads data from the image capturing environment data storage unit 21 and the standard image storage unit 22, and generates a pseudo-site image from the standard image data by using the image capturing environment data. The pseudo-site image is an image that is generated by reflecting the image capturing environment of the camera 10 in the standard image. An image generated in this manner may be assumed to be a virtual captured image that may be acquired at the use site, that is, the location where the camera 10 is actually installed, and may thus be referred to as a "pseudo-site image". The pseudo-site image that is generated is output to the relearning-use data storage unit 24.

A generated pseudo-site image and an attribute value as a correct value that is associated with standard image data used at the time of generation of the pseudo-site image are associated with each other and stored as relearning-use data in the relearning-use data storage unit 24. Moreover, in the present embodiment, data regarding an estimation model which is provided in advance to the attribute estimation device 30 and which is to be updated by relearning is also stored. These pieces of data stored in the relearning-use data storage unit 24 are output to the estimation model relearning unit 25.

The estimation model relearning unit 25 performs relearning of the estimation model by using the relearning-use data. The estimation model which has been updated by relearning is provided to the person attribute estimation device 30.

The person attribute estimation device 30 includes an estimation model storage unit 31, and an attribute estimation unit 32. An initial estimation model that is generated by learning based on a versatile face image with a correct answer which is stored in the standard image storage unit 22, for example, at the time of manufacture/shipping of the person attribute estimation device 30 is stored in the estimation model storage unit 31. The estimation model storage unit 31 outputs a new estimation model acquired from the estimation model relearning unit 25 to the attribute estimation unit 32.

The attribute estimation unit 32 acquires an image captured by the camera 10, and estimates the age group and sex of a person included in the image by using the estimation model.

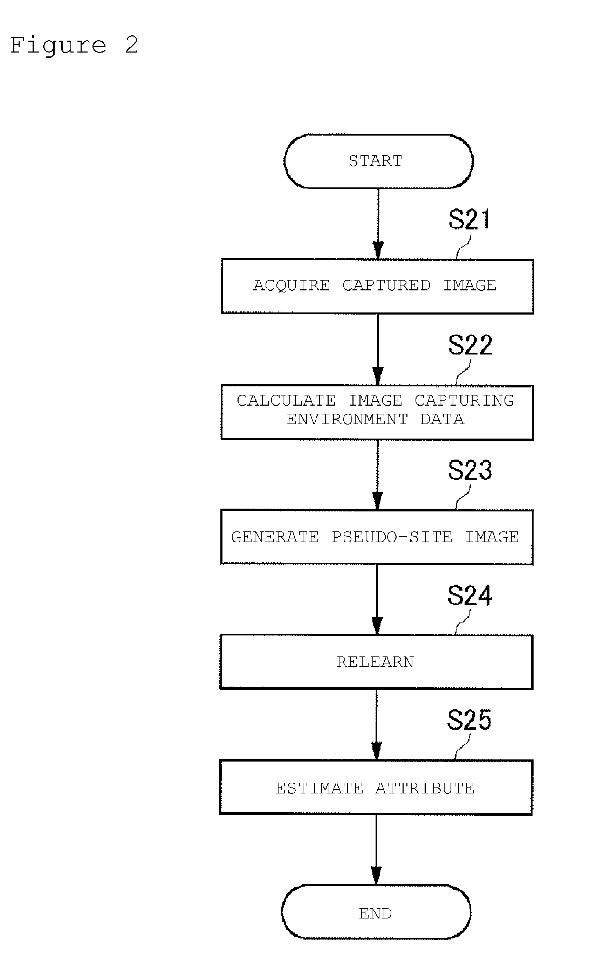

Next, an operation of the person attribute estimation system 1 will be described with reference to Figures 2 to 6.

First, an image including the face of a person captured by the camera 10 at an actual use site, that is, the image capturing location of persons who are attribute estimation targets, is acquired (step S21). The aim of acquisition of a captured image of a person in step S21 is to obtain information about the image capturing environment of the camera 10. Accordingly, image capturing is desirably performed by installing the camera 10 at an actual use site or at a location assuming an actual use site.

In the case where the camera 10 generates sequential frame images as a video, a plurality of sequential frame images in which the position of the face of the same person gradually changes are generated. In the present embodiment, of the sequential frame images, a frame image in which the face is shown in a representative face detection region is selected. A representative face detection region is a partial region in a captured image where the face region of an attribute estimation target person is expected to be detected, and more specifically, it is one or more partial regions of the frame images generated by the camera 10 where the face region(s) of person(s) were frequently detected. The manner of reflecting the image capturing environment is different depending on the position in an image where the face of a person is shown. Accordingly, by reflecting, in the estimation model, the image capturing environment for the partial region where the face is expected to be most often detected at the time of actual use, as will be described later, attribute estimation may be more accurately performed.

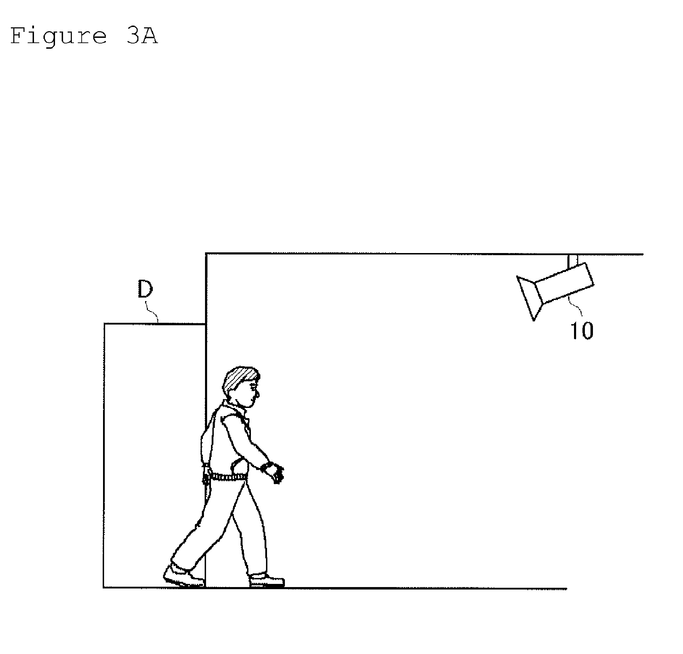

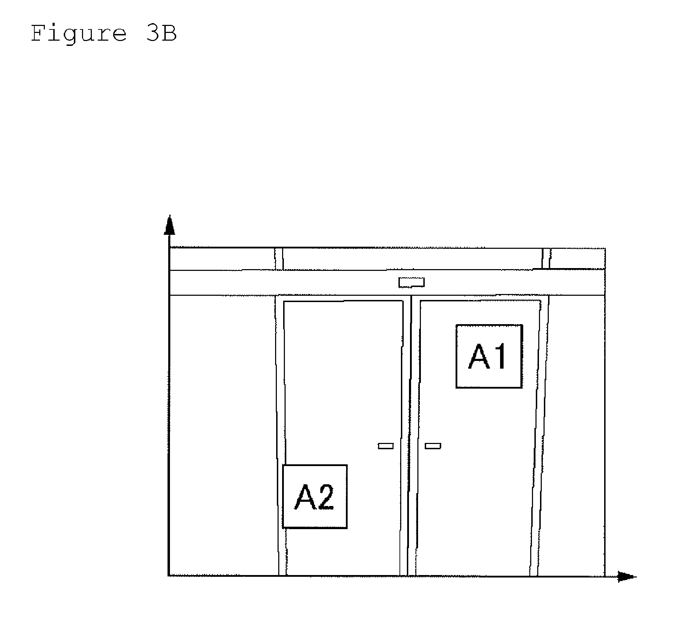

For example, as shown in Figure 3A, when the camera 10 is installed near an entrance D of a store, and the periphery of the entrance D is captured, an image as shown in Figure 3B is obtained. If it is found that, when capturing customers entering the store from D at this position, the faces of the customers are most often shown in regions A1 and A2 in Figure 3B, these regions are made the representative face detection regions, and a frame image in which the face of a customer is shown in the region A1 and a frame image in which the face of a customer is shown in the region A2 are selected. Although the orientations of the faces, the illumination states and the like in the region A1 and the region A2 may be different, if the orientations of the faces, the illumination states and the like in these regions are almost the same, it is also possible to select only the frame in which the face is included in one of the regions.

Next, the face orientation angle (upward/downward, left/right) of a person in an image and the luminance contrast in the face region are calculated as the data for estimation of the image capturing environment of the camera 10 by using the image captured in step S21 (step S22). In the present embodiment, since the pieces of image capturing environment data are represented in the form of distributions, it is desirable to use as many captured images as possible in step S22. Additionally, the calculation process of the image capturing environment data in step S22 will be described later in detail.

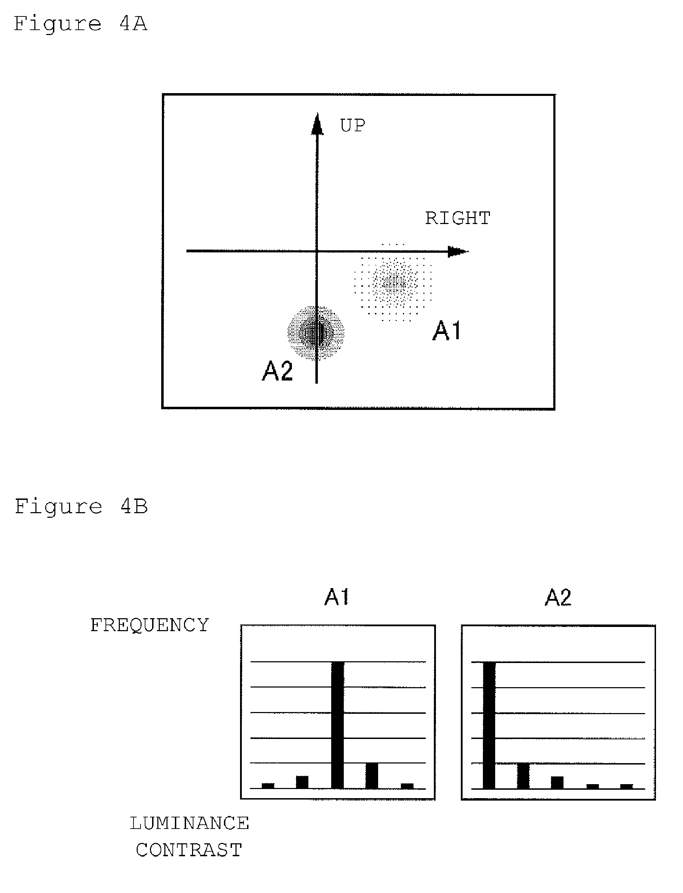

Figure 4A schematically shows as a graph of the distribution example of the face orientation angle data calculated in step S22, and Figure 4B schematically shows as a graph of the distribution example of the luminance contrast data of a face region. In the example of Figure 4A, it can be seen that the orientations of faces in the region A1 in Figure 3B are mainly distributed at 10 degrees downward and 20 degrees rightward, and the orientations of faces in the region A2 in Figure 3B are mainly distributed at 20 degrees downward and 0 degrees leftward/rightward. On the other hand, in the example of Figure 4B, it can be seen that the contrast in the region A1 is most frequently 60%, but the contrast in the region A2 is most frequently 20%.

Next, a pseudo-site image is generated by using the image capturing environment data obtained in step S22 and a standard image (step S23). Generation of a pseudo-site image is, in other words, processing such as transformation of a standard image which takes into account the image capturing environment of the camera 10. Since the image capturing environment data of the camera 10 is used in the processing of the standard image, the pseudo-site image that is generated may be used as an image that is obtained by directly capturing a person who is a subject of the standard image at the use site. The images generated from the standard image may, in this sense, be said to be "pseudo" site images. In the present embodiment, generation of the pseudo-site image is performed in step S22 together with determination of distribution of the image capturing environment data, according to the data distribution ratio.

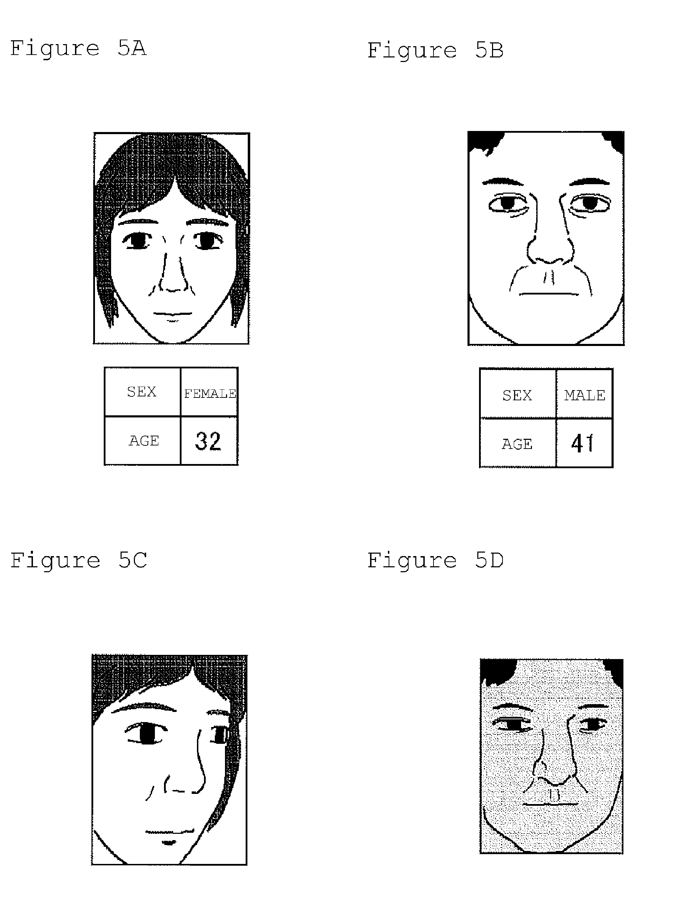

Figure 5A is an example of the standard image that is stored in the standard image storage unit 22. The standard image is a face image that is captured from the front. The age and the sex of a person who is a subject of each image are known, and these attribute values are attached to each image as the correct values, as shown in Figures 5A and 5B. The orientation of the face and the contrast of the standard image are transformed based on the image capturing environment data calculated in step S22. In the example of Figure 4A, the orientations of faces in the region A2 are mainly distributed at 20 degrees downward and 0 degrees rightward. Accordingly, an image in which the orientation of the face in the standard image has been transformed to 20 degrees downward, 0 degrees rightward, and peripheral angles is generated as the pseudo-site image in the region A2 according to the distribution ratio of Figure 4A. The same can be said for the region A1.

Transformation of the orientation of the face in the standard image may be performed by various methods such as AAM (Active Appearance Model) and 3D Morphable Model. By setting a parameter corresponding to a change in the face orientation in the vertical direction and the horizontal direction at the time of constructing a model by such a method, the orientation of a face may be transformed to an arbitrary angle. In this manner, in step S23, the face orientation of the standard image is three-dimensionally transformed, and a pseudo-site image is generated.

Furthermore, in the example of Figure 4B, the contrast in the region A2 is mainly distributed around 20%. Accordingly, a transformation image is generated according to the distribution ratio of Figure 4B in such a way that the contrast of the standard image is at 20% or a close value. The same can be said for the region A1. Examples of pseudo-site images generated by transforming a standard image in the above manner are shown in Figures 5C and 5D. Figure 5C is a pseudo-site image in the region A1 generated by transformation of the standard image in Figure 5A, and Figure 5D is a pseudo-site image in the region A2 generated by transformation of the standard image in Figure 5B.

Next, relearning of an estimation model for attribute estimation is performed (step S24). In the present embodiment, an estimation model is stored in advance in the attribute estimation device 30, and an initial estimation model is updated by relearning, and a new estimation model is generated. The pseudo-site image generated in step S23 is used in this relearning of the estimation model. More specifically, a correct attribute value is attached to the pseudo-site image which has been generated, and this pseudo-site image with the correct answer is input as a sample for learning. Additionally, the flow of a process for relearning of the estimation model will be described later in detail.

Since the pseudo-site image is generated by transforming each standard image, the correct attribute value that is associated with the pseudo-site image is also one that is attached to the original standard image. Normally, when a new sample image for learning use is added, the correct attribute value has to be determined and be associated with the new sample image. In contrast, in the present embodiment, the subject of the pseudo-site image which is the new sample image is the same as the subject of the standard image, and thus, the correct attribute value of the standard image may be associated as it is, and no burdensome task is needed.

In the examples of Figures 5A to 5D, the pseudo-site image in Figure 5C is generated from the standard image in Figure 5A, and the pseudo-site image in Figure 5D is generated from the standard image in Figure 5B. Accordingly, the attribute values of "sex: female" and "age group: forties" and the pseudo-site image in Figure 5C are paired together, and the attribute values of "sex: male" and "age group: thirties" and the pseudo-site image in Figure 5D are paired together, and are used as pieces of relearning-use data. In this example, different pseudo-site images are generated for the regions A1 and A2 in the captured image, and thus, relearning of the estimation model may be performed for each partial region, and a different estimation model may be generated for each partial region.

Then, attribute estimation of an attribute estimation target person is performed by using an estimation model obtained by such relearning (step S25). Estimation of an attribute of a person will be described later in detail, but simply put, the following process is performed. That is, first, face detection is performed based on an image of a customer captured by the camera 10, and a feature is extracted from the face image. The age group and the sex which are the attributes of the person of the face image are estimated based on the feature, by using the estimation model updated in step S24 by learning.

In the examples of Figures 5A to 5D, if different estimation models are generated for a plurality of partial regions in a captured image, attribute estimation for a person captured by the camera 10 may be performed while selecting an estimation model based on the position of the face of the person in the captured image. For example, if the face of the attribute estimation target person is detected, in the image captured by the camera 10, at a position close to the partial region A1 in Figure 3B, attribute estimation may be performed by using the estimation model generated for the region A1. Also, if the face of the person is sequentially detected at both a position close to the partial region A1 and a position close to the A2, attribute estimation may be performed by using the estimation model for the partial region in which the face of the person is shown more clearly.

In this manner, in the present embodiment, a standard image, which is a versatile face image, is transformed in such a way that it is as if the standard image is captured at the actual installation location of the camera 10, by using data indicating the use site environment of the camera 10, that is, the location of actual installation of the camera 10 and the actual installation state of the camera 10. Then, relearning of the estimation model is performed by using this pseudo-site image, and attribute estimation is performed based on the updated estimation model. Accordingly, an estimation model for attribute estimation reflecting the image capturing environment of the use site may be generated with no burdensome task.

(Detailed Configuration of Attribute Estimation Unit)

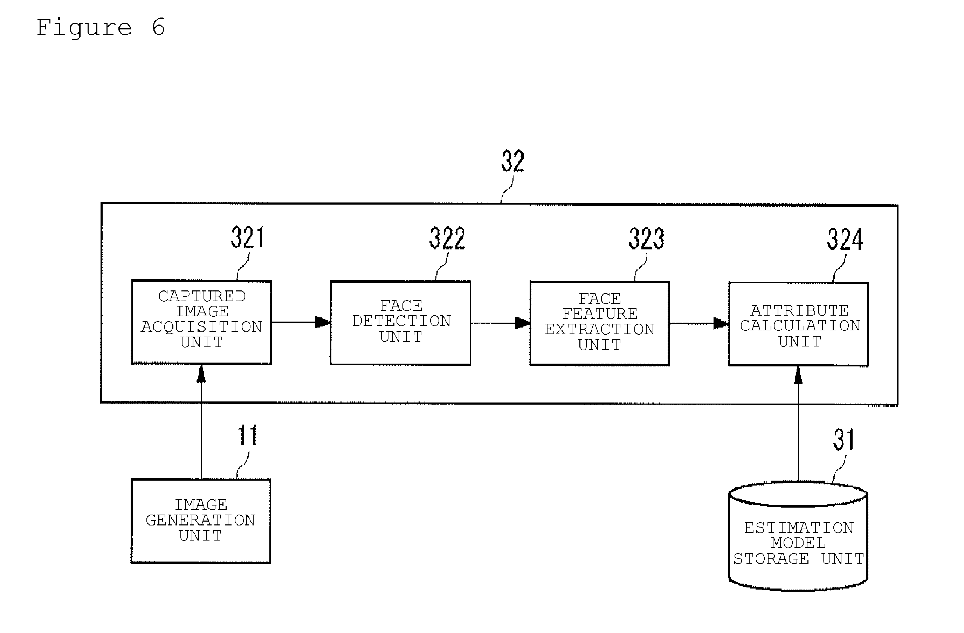

Next, a detailed configuration of the attribute estimation unit 32 according to the present embodiment will be described with reference to the drawings. Figure 6 is a block diagram showing the configuration of the attribute estimation unit 32. As shown in Figure 6, the attribute estimation unit 32 includes a captured image acquisition unit 321, a face detection unit 322, a face feature extraction unit 323, and an attribute calculation unit 324.

The captured image acquisition unit 321 acquires an image generated by the image generation unit 11 of the camera 10 by image capturing, and outputs the image to the face detection unit 322. The face detection unit 322 detects a face region in the captured image, and outputs a partial image of the face region to the face feature extraction unit 323. Detection of a face region may be performed by various methods, and for example, AdaBoost method based on Haar-like features may be used. Additionally, as described above, in the present embodiment, image capturing environment data for a representative face detection region is calculated, and an estimation model is generated. Accordingly, the face detection unit 322 may output, to the face feature extraction unit 323, the image of a face region portion of an image in which a face is detected at the representative face detection region or at a close position.

The face feature extraction unit 323 extracts an existing face feature, such as a Gabor feature, from the partial image of the face region, and outputs the feature to the attribute calculation unit 324. In the present embodiment, to increase the accuracy of extraction of the face feature, face components such as eyes, nose and the like are detected from the acquired face region image, and normalization is performed regarding the size of the face and the like based on these face components, and then, extraction of a face feature is performed.

The attribute calculation unit 324 determines the attribute of the partial image of the face region from the face feature acquired from the face feature extraction unit 323 and by using the estimation model stored in the estimation model storage unit 31. In the present embodiment, a general face feature that is acquired is projected onto a feature space for attribute estimation according to a linear discriminant method, and then, an attribute value is calculated by using an attribute estimation function. That is, in the present embodiment, an estimation model refers to matrix for projecting the face feature acquired from the face feature extraction unit 323 onto a feature space for attribute estimation and an attribute estimation function for performing attribute estimation in the feature space after projection.

According to the linear discriminant method, projection onto a feature space for attribute estimation is performed by Expression (1) below.

[Math. 1]

$$y = W^T x \quad \ldots \text{Expression (1)}$$

Here, x is a face feature vector before projection, and y is a feature vector after projection. Also, W is a mapping matrix, and will be referred to as a feature space projection matrix in the following.

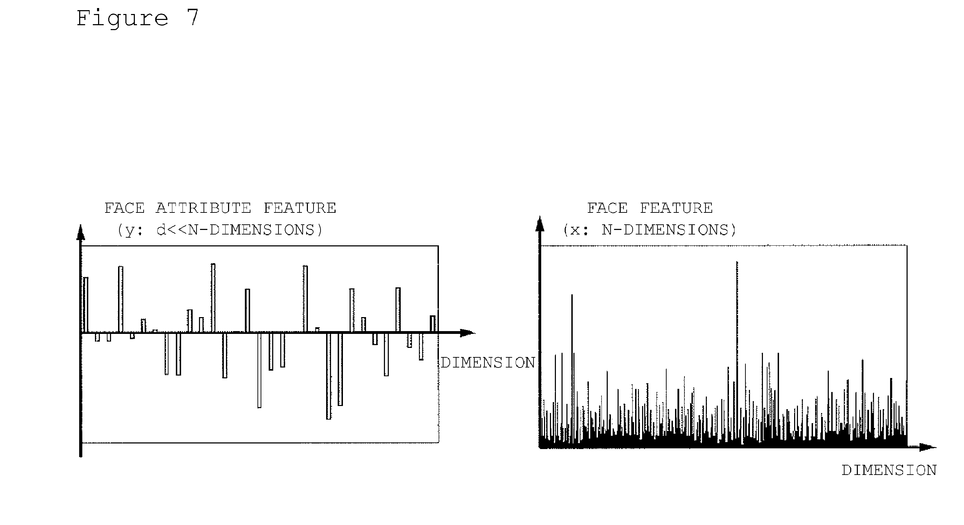

Figure 7 is a diagram showing an example where a face feature x extracted by an existing method is transformed into a feature y for attribute estimation by the feature space projection matrix W. Due to the linear discriminant method, the dimension of the face feature after transformation is smaller than before transformation, but a feature more appropriately representing the estimation target attribute (age group, sex) is obtained.

On the other hand, the attribute estimation function is a function that takes the feature vector y after projection as the input value, and is determined by Expression (2) below.

[Math. 2]

$$f(y) = b^T \cdot y \quad \ldots \text{ Expression (2)}$$

where

[Math. 3]

$$b = (Y^T Y + \alpha I)^{-1} Y t \quad \ldots \text{ Expression (3)}$$

is established, and $\alpha$ is a weight coefficient, and I is an identity matrix. A vector that takes each correct attribute value $t_i$ as an element is expressed by t, and each $t_i$ takes a value of 20 (twenties), 30 (thirties) or the like in the case of age group, and -1 (male), +1 (female) or the like in the case of sex, for example. When there are k samples, the vector t may be described as below.

[Math. 4]

$$t = \begin{bmatrix} t_1 \\ \vdots \\ t_k \end{bmatrix} \quad \text{Expression (4)}$$

Also,

[Math. 5]

$$Y = \begin{bmatrix} y_{11} & \cdots & y_{1d} \\ \vdots & \ddots & \vdots \\ y_{k1} & \cdots & y_{kd} \end{bmatrix} \quad \text{Expression (5)}$$

is established, and d is the number of dimensions of the feature vector y after projection.

When the feature vector after projection is input to Expression (2), a scalar quantity representing the attribute value of the person of the face image is output.

(Flow of Process of Relearning of Estimation Model)

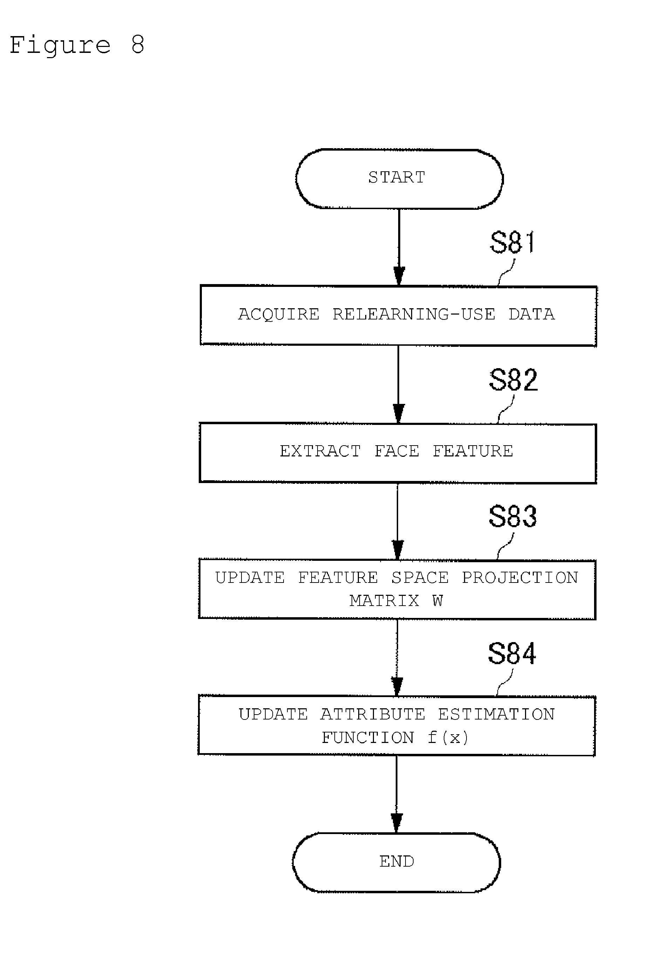

Next, the flow of the process of estimation model relearning at the estimation model relearning unit 25 according to the present embodiment will be described with reference to the flow diagram of Figure 8.

First, relearning-use data is acquired (step S81). As described above, the relearning-use data is the pseudo-site image and the corresponding correct attribute value data, and data regarding the initial estimation model which is to be updated by relearning. Next, a face feature of each pseudo-site image acquired in step S81 is extracted (step S82). The face feature here may be an existing face feature such as the Gabor feature or the like.

Then, update of the feature space projection matrix W by relearning is performed by using the face features of the pseudo-site images extracted in step S82 and the data regarding the correct attribute value corresponding to each pseudo-site image and the initial estimation model acquired in step S81 (step S83).

According to the linear discriminant method that is used in attribute estimation of the present embodiment, the feature space projection matrix W is defined as a matrix that generates a feature space where the ratio of between-group covariance to within-group covariance is the greatest. Accordingly, relearning of the feature space projection matrix W in step S83 is performed by solving Expression (6) below in such a way that the ratio of the between-group variance to the within-group variance becomes greater.

[Math. 6]

$$W = \arg\max \frac{\left| W^T \Sigma_B {}' W \right|}{\left| W^T \Sigma_W {}' W \right|} \qquad \text{Expression (6)}$$

Here, $\Sigma_B$ is a covariance matrix for between-attribute group, and $\Sigma_W$ is a covariance matrix for within-attribute group. The between-attribute group covariance matrix $\Sigma_B$ functions as an indicator indicating, with respect to a certain attribute, the correlation between groups of different attribute values. On the other hand, the within-attribute group covariance matrix $\Sigma_W$ functions as an indicator indicating, with respect to a certain attribute, the correlation between individual pieces of data within a group of the same attribute value. For example, when focusing on sex as the attribute, the between-attribute group covariance matrix $\Sigma_B$ indicates how far apart a male group and a female group are, and the within-attribute group covariance matrix $\Sigma_W$ indicates the degree of variance of the feature data in each of the groups for male and female.

Between-attribute group covariance matrix $\Sigma_B{}'$ and within-attribute group covariance matrix $\Sigma_W{}'$ in Expression (6) are the between-attribute group covariance matrix $\Sigma_B$ and the within-attribute group covariance matrix $\Sigma_W$ which have been updated (recalculated) by using the correct attribute value acquired in step S81 and the face feature data of the pseudo-site image extracted in step S82. In this manner, in step S83, two covariance matrices are first updated.

The between-attribute group covariance matrix $\Sigma_B$ and the within-attribute group covariance matrix $\Sigma_W$ are updated to $\Sigma_B{}'$ and $\Sigma_W{}'$ respectively by Expressions (7) and (8) below.

[Math. 7]

$$\Sigma_B{}' = (1 - \lambda)\Sigma_{B\_retrain} + \lambda\Sigma_{B\_ini} \quad \text{... Expression (7)}$$

[Math. 8]

$$\Sigma_W{}' = (1 - \lambda)\Sigma_{W\_retrain} + \lambda\Sigma_{W\_ini} \quad \text{... Expression (8)}$$

Here, $\Sigma_B$ retrain and $\Sigma_W$ retrain are the between-attribute group covariance matrix and the within-attribute group covariance matrix for a pseudo-site image for relearning use, and are calculated by using the correct attribute value acquired in step S81 and the face feature data of the pseudo-site image extracted in step S82.

Also, $\Sigma_{B\_ini}$ and $\Sigma_{W\_ini}$ are initial covariance matrices and are between-attribute group covariance matrix and within-attribute group covariance matrix before relearning using the pseudo-site image. The data regarding the initial estimation model acquired in step S81 refers to this initial covariance matrices. In the present embodiment, these initial covariance matrices may be generated in advance by using the standard image with a correct attribute value which was used to generate the pseudo-site image, for example. Furthermore, λ is a weight coefficient that takes a value between 0 and 1. For example, if sufficient amount of data for relearning use is accumulated, a greater λ may be set, and the feature of the pseudo-site image may be well reflected in the covariance matrices, and in turn, the feature space projection matrix W.

The between-attribute group covariance matrix $\Sigma_B$ and the within-attribute group covariance matrix $\Sigma_W$ are determined respectively by Expressions (9) and (10) below.
[Math. 9]

$$\Sigma_B = \sum_{j=1}^{C} (\mu_j - \mu)(\mu_j - \mu)^T \qquad \text{Expression (9)}$$

[Math. 10]

$$\Sigma_W = \sum_{j=1}^{C} \sum_{i=1}^{n_j} (x_{ji} - \mu_j)(x_{ji} - \mu_j)^T \qquad \text{Expression (10)}$$

Here, C is the number of attribute groups. In the present embodiment, C is 2 for sex, and C is 10 for age group (age 0 to 10, age 10 to 20, ..., age 90 to 100). Also, $n_j$ is the number of samples for an attribute group number j, $\mu_j$ is an average face feature of the attribute group j, $\mu$ is an average face feature of all the samples, and $x_i$ is the face feature of an individual image.

In this manner, the feature space projection matrix W is updated by relearning, and then, the attribute estimation function is updated (step S84). The attribute estimation function may be described as the function f(y) of the feature y after feature space projection, as described above, or it may also be described as a function f(x) of x in the manner of Expression (11) by using the feature vector x before projection and the feature space projection matrix W.
[Math. 11]

$$f(x) = b^T \cdot y = b^T W^T x \quad \dots \text{Expression (11)}$$

Accordingly, the attribute estimation function f(x) is also updated when the feature space projection matrix W is updated.

As described above, in the present embodiment, the feature space projection matrix W and the attribute estimation function f(x) which are the model for attribute estimation are updated by relearning using the feature of the pseudo-site image and the correct attribute value.

(Detailed Configuration of Image Capturing Environment Estimation Unit)

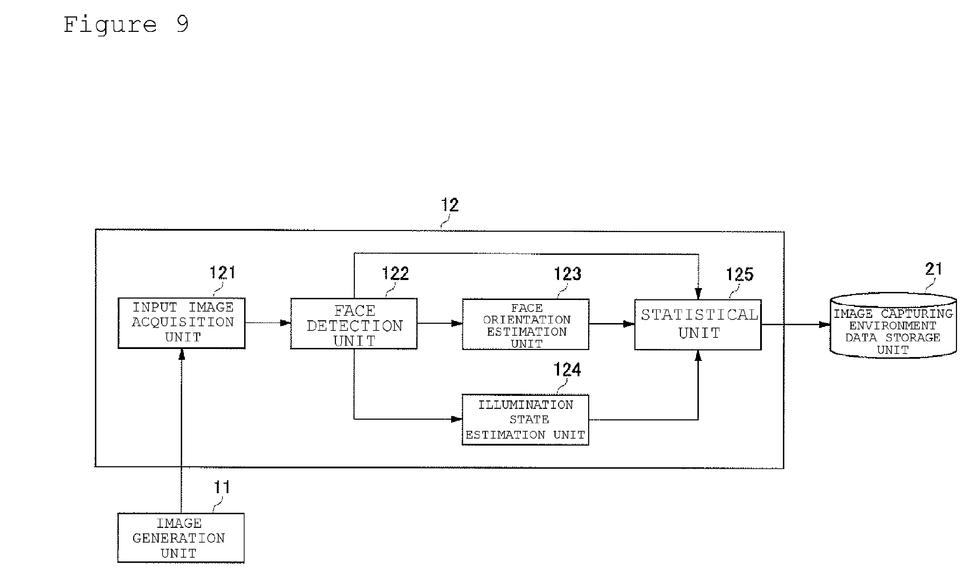

Next, the detailed configuration of the image capturing environment estimation unit 12 according to the present embodiment will be described with reference to the drawing. Figure 9 is a block diagram showing the configuration of the image capturing environment estimation unit 12. As shown in Figure 9, the image capturing environment estimation unit 12 includes an input image acquisition unit 121, a face detection unit 122, a face orientation estimation unit 123, an illumination state estimation unit 124, and a statistical unit 125.

The input image acquisition unit 121 acquires a captured image, or more specifically, a frame image generated by the image generation unit 11 of the camera 10, and outputs the image to the face detection unit 122. The face detection unit 122 detects a face region in the acquired image, and outputs the partial image of the face region, of the acquired image, to the face orientation estimation unit 123, the illumination state estimation unit 124, and the statistical unit 125, together with information about the position in the image.

The face orientation estimation unit 123 estimates the orientation of the face included in the partial image acquired from the face detection unit 122, and outputs data regarding the face orientation to the statistical unit 125. Estimation of the face orientation angle may be performed by various methods. For example, estimation may be performed by k-nearest neighbor algorithm based on the feature of a sample face image for learning use and the feature of the face image acquired from the face detection unit 122.

The illumination state change unit 124 calculates the luminance contrast of the partial image of the face region which has been acquired, and outputs the luminance contrast to the statistical unit 125. The luminance contrast C is calculated by Expression (12) below.

[Math. 12]

$$C = \frac{I_{max} - I_{min}}{I_{max} + I_{min}} \qquad \text{Expression (12)}$$

In Expression (12), $I_{min}$ is the minimum luminance value of the face region, and $I_{max}$ is the maximum luminance value of the face region.

The statistical unit 125 performs clustering for the face detection region in each frame image, which is an input image, and specifies a region in the image where the face is most frequently detected as the representative face detection region. Also, the statistical unit 125 uses the data acquired from the face orientation estimation unit 123, and calculates the distribution of the face orientation in the representative face detection region. The statistical unit 125 further uses the data acquired from the illumination state estimation unit 124, and calculates the distribution of the luminance contrast in the representative face detection region. The statistical unit 125 outputs the face orientation distribution data and the luminance contrast data to the image capturing environment data storage unit 21.

In this manner, the image capturing environment estimation unit 12 includes a structure for calculating data regarding the image capturing environment of the camera 10, based on the image generated within the camera 10 by capturing.

As described above, according to the person attribute estimation system of the first embodiment, since relearning of a model for attribute estimation is performed by taking a pseudo-site image, which is an image obtained by transforming a standard image by using data indicating the image capturing environment of the camera 10, as a sample image for relearning use, and by taking the attribute data associated with the standard image as the correct attribute data of the pseudo-site image, a model reflecting the image capturing environment of the actual use site of the camera 10 may be reconstructed without burdensome tasks, and the accuracy of estimation of attributes of a person, such as age group and sex, may be increased.

Additionally, in the embodiment described above, data regarding the face orientation and the illumination state are used as the image capturing environment data, but in addition to this, data regarding various camera noises caused due to the properties of the camera itself or the setting of the camera, such as block distortion caused by image sensor noise, JPEG compression or the like, and the manner of focusing, may also be used. Data regarding camera noises may be calculated by using a captured image of the use site acquired from the image generation unit 10, or, if data regarding camera noises is already known, this may be input.

Also, person attribute estimation may be performed by adding a change over time of the illuminance around the camera 10 as the image capturing environment data, generating a pseudo-site image and an estimation model that are different for each time slot, and selecting an estimation model according to the time of attribute estimation.

(Second Embodiment)

Next, a person attribute estimation system according to a second embodiment will be described. In the second embodiment, generation of a pseudo-site image reflecting the image capturing environment of the use site of a camera from a standard image is the same as in the first embodiment. In the second embodiment, to further increase the estimation accuracy, there is provided a structure for generating a new image reflecting the camera noise or the like at the actual use site of a camera 10 in a generated pseudo-site image, and taking this image as image data for relearning use.

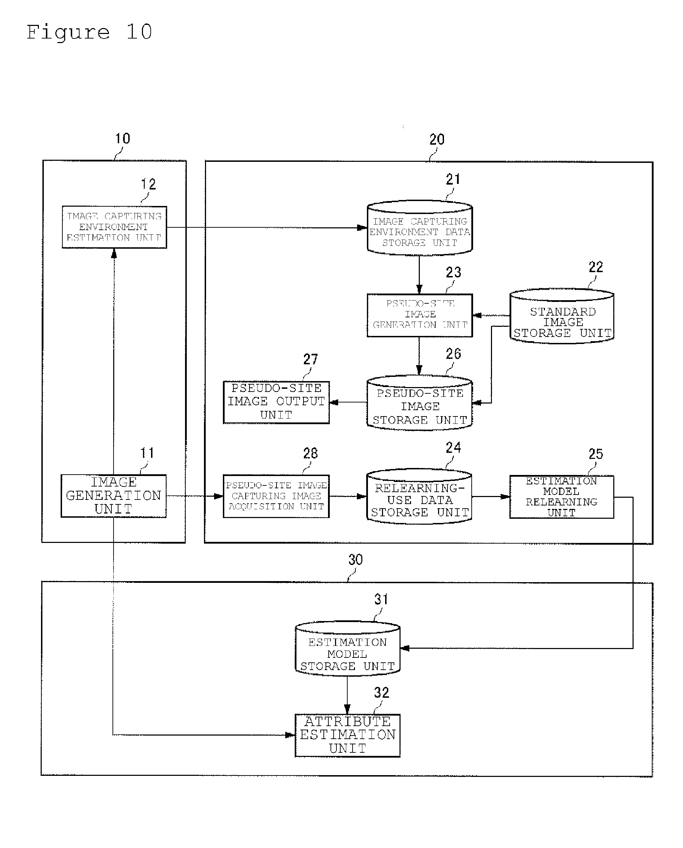

Figure 10 is a diagram showing the configuration of a person attribute system of the second embodiment. The configurations of a camera 10 and an attribute estimation device 30 are the same as in the first embodiment. Also, a relearning control system 20 includes an image capturing environment data storage unit 21, a standard image storage unit 22, a pseudo-site image generation unit 23, a relearning-use data storage unit 24, and an estimation model relearning unit 25, as in the first embodiment. In addition, in the present embodiment, the relearning control system 20 further includes a pseudo-site image storage unit 26, a pseudo-site image output unit 27, and a pseudo-site image capturing image acquisition unit 28.

The pseudo-site image storage unit 26 stores a pseudo-site image generated at the pseudo-site image generation unit 22. The pseudo-site image output unit 27 outputs the pseudo-site image stored in the pseudo-site image storage unit 26. The pseudo-site image output unit 27 is connected to a predetermined unit, not shown, such as a printer or a tablet PC, and outputs pseudo-site image data to the unit. The pseudo-site image that is output is visualized by being printed on a sheet of paper, or by being displayed on the display of the tablet PC, for example.

When a subject (a printed matter, a display, or the like) showing the pseudo-site image output from the pseudo-site image output unit 27 is captured by the camera 10, the image generation unit 11 of the camera 10 generates the image, and outputs the image to the relearning control system 20.

The pseudo-site image capturing image acquisition unit 28 acquires the image, which is the captured image of the pseudo-site image, generated by the image generation unit 11, and outputs the image to the relearning-use data storage unit 24. That is, a pseudo-site image capturing image is an image obtained by capturing a subject showing the pseudo-site image by the camera 10 at the use site of the camera 10. In this manner, by actually capturing the pseudo-site image at the use site, an image more accurately reproducing the noise of the camera and the illumination state may be obtained.

As in the first embodiment, the relearning-use data storage unit 24 stores initial covariance matrix data as data regarding an estimation model which is an update target. Also, the relearning-use data storage unit 24 stores the pseudo-site image capturing image as relearning-use image data, and stores a correct attribute value that is associated with a standard image as relearning-use correct attribute data.

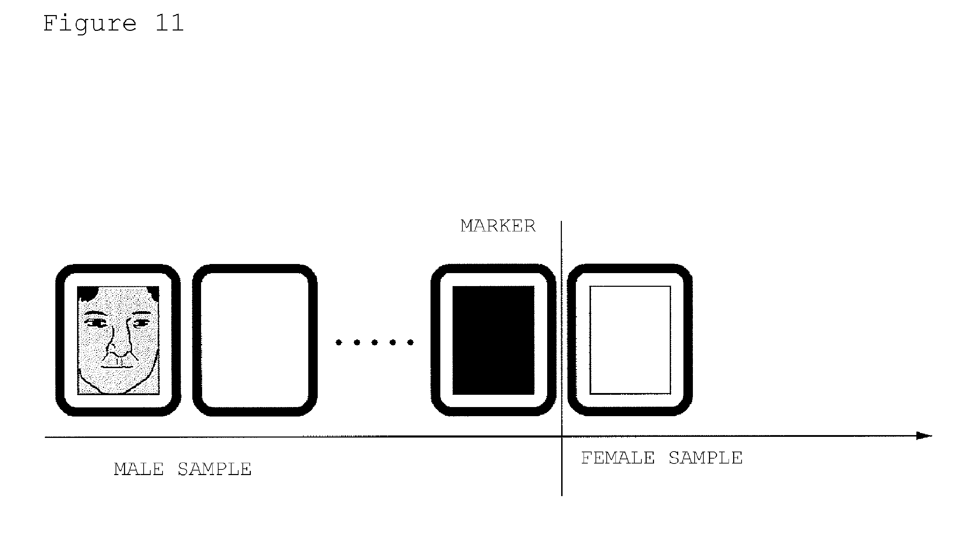

Association of the pseudo-site image capturing image, which is the relearning-use image data, and the attribute value of the standard image, which is the relearning-use correct attribute data, is realized by various methods. For example, as shown in Figure 11, the pseudo-site image output unit 27 may be configured to output pseudo-site images next to one another for each attribute value (in this case, sex is focused on as the attribute) by using the correct attribute value of the standard image, and to insert a marker allowing identification of a non-face image at a position where the attributes are switched and output the marker. By capturing in the order of output, association of a pseudo-site image capturing image and correct attribute value data may be collectively and easily performed for each attribute value. Alternatively, the pseudo-site image output unit 27 may attach a correct attribute value or a bar code indicating the ID of a corresponding standard image to each pseudo-site image and output the pseudo-site image, and may associate the attribute value to the pseudo-site image capturing image based on the captured bar code.

The estimation model relearning unit 25 performs relearning of an attribute estimation model by using the data stored in the relearning-use data storage unit 24. That is, in the present embodiment, a feature of the pseudo-site image capturing image is extracted by using the pseudo-site image capturing image instead of the pseudo-site image, and then, relearning of the estimation model is performed.

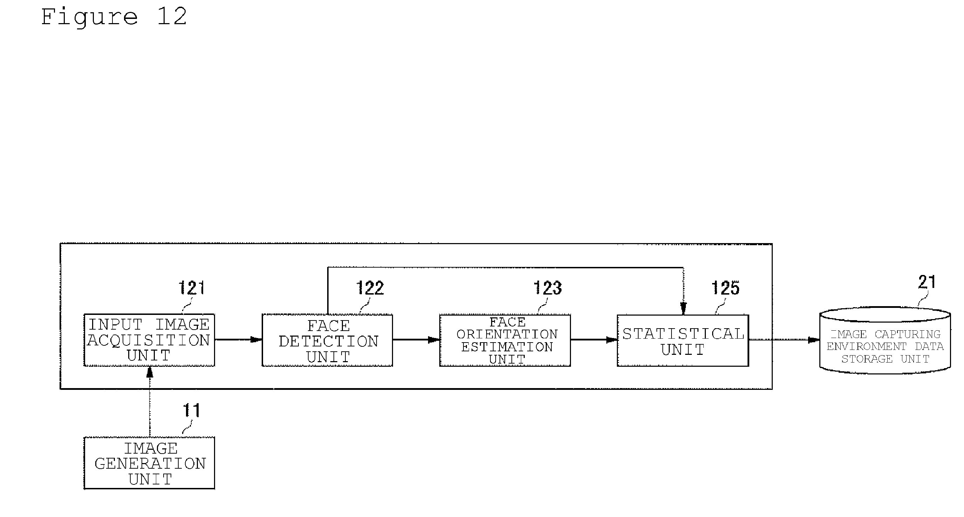

Figure 12 is a diagram showing the configuration of the image capturing environment estimation unit 12 according to the second embodiment. As in the present embodiment, in the case of actually capturing a pseudo-site image at the use site of the camera 10, the noise of the camera and the illumination state at the use site may be grasped from an image capturing a subject showing the pseudo-site image. Accordingly, in the present embodiment, the image capturing environment estimation unit 12 is not provided with the illumination state estimation unit 124 of the first embodiment.

Also in the present embodiment, as in the first embodiment, the statistical unit 125 specifies the representative face detection region. Capturing of the pseudo-site image by the camera 10 is desirably performed by presenting a visualization of the pseudo-site image in the representative face detection region specified by the statistical unit 125, at a position where the face in the pseudo-site image is present.

As described above, according to the attribute estimation system 1 of the second embodiment, relearning of an estimation model is performed by generating a pseudo-site image reflecting the image capturing environment of the camera 10 and by using the image obtained by capturing a subject showing the pseudo-site image by the camera 10, and thus, an estimation model more accurately reflecting the image capturing environment of the camera 10 may be generated.

Additionally, a three-dimensional person model may be generated from the pseudo-site image, and the pseudo-site image capturing image may be generated by taking this model as the subject.

(Other Modified Examples)

In the embodiments described above, cases have been described of estimating the attribute of a subject by detecting the face region of the subject from an image generated by the camera 10, but the attribute may also be estimated by using a partial region image of a person other than the face region. In this case, image capturing environment data for a representative person detection region may be acquired instead of the representative face detection region of the embodiments described above, a pseudo-site image may be generated, and an estimation model may be generated. Moreover, the attribute to be the estimation target may be only age (age group) or sex, or may be race, social status or category (high school students, working age, elderly persons, and the like) without being limited to age and sex.

Also, in the embodiments described above, data regarding the orientation of the face, data regarding the illumination state, and camera noise have been described as the examples of the image capturing environment data, but the image capturing environment data may be related to other factors that may influence the captured image. Moreover, a pseudo-site image may be generated in the embodiments described above by arbitrarily combining a plurality of pieces of the image capturing environment data or by using only one piece of the image capturing environment data.

Moreover, in the embodiments described above, cases of generating a pseudo-site image by processing a standard image, which is an image of a person, have been described, but a pseudo-site image may be generated by capturing a person by a stereo camera and processing person model data such as polygon data for generating a three-dimensional image of the person, for example.

Moreover, in the embodiments described above, cases have been described where the image capturing environment estimation unit 11 is provided to the camera 10, and the estimation model storage unit 31 is provided to the attribute estimation device 30, but the image capturing environment estimation unit and/or the estimation model storage unit may be provided to the relearning control system 20. Also, the configuration of the relearning control server may be provided to the camera 10 or the attribute estimation device 30, or the configuration of the attribute estimation device 30 may be provided to the camera 10. Furthermore, the operations of the camera 10, the relearning control server 20, and the attribute estimation device 30 may all be realized by one device.

Furthermore, in the embodiments described above, cases have been described where the attribute estimation device 30 includes the initial estimation model, and where the initial estimation model is updated by relearning using the pseudo-site image, but the attribute estimation device 30 does not have to include the initial estimation model, and an estimation model that is generated by learning using the pseudo-site image may be used from the start for attribute estimation. Also, relearning of the estimation model may be repeatedly performed according to change of the installation location of the camera or addition of a standard image, for example.

Moreover, in the embodiments described above, cases have been described of calculating the image capturing environment data from a captured image generated by the camera 10, but the image capturing environment data may alternatively be manually input by a user or be acquired from a sensor or the like installed at the use site of the camera 10. For example, in the case where the camera 10 is installed so as to capture the face of a customer entering a store from a direction 30 degrees to the left and 20 degrees above the front, the face of the customer is captured in a captured image being oriented about 30 degrees to the right and about 20 degrees downward. The face orientation to be captured may change depending on the height of a person, and the average height of each age group may additionally be taken into account. In this manner, if data directly indicating the image capturing environment may be obtained, acquisition of a captured image in step S21 or capturing by the camera 10 preceding step S21 does not have to be performed.

Moreover, in the embodiments above, cases have been described where attribute estimation is performed according to the linear discriminant method, but an attribute may alternatively be estimated by using Kernel regression, a Gaussian mixture distribution model or the like. In the embodiments described, data regarding the initial estimation model is stored in advance in the relearning-use data storage unit, but relearning may be performed by acquiring the initial estimation model or data regarding the same from the estimation model storage unit at the time of relearning of an estimation model.

While there has been described what is at present considered to be preferred embodiments of the invention, it is to be understood that various modifications may be made thereto, and it is intended that appended claims cover all such modifications as fall within the true spirit and scope of the invention.

Industrial Applicability

The attribute estimation system of the present invention achieves an effect that accurate attribute estimation may be performed according to the actual image capturing environment, and is useful as a person attribute estimation system for estimating an attribute of a person by using an estimation model that is generated by learning, for example.

Reference Signs List

1       Person attribute estimation system
10      Camera
11      Image generation unit
12      Image capturing environment estimation unit
121     Input image acquisition unit
122     Face detection unit
123     Face orientation estimation unit
124     Illumination state estimation unit
125     Statistical unit

20 Relearning control system
21 Image capturing environment data storage unit
22 Standard image storage unit
23 Pseudo-site image generation unit
24 Relearning-use data storage unit
25 Estimation model relearning unit
26 Pseudo-site image storage unit
27 Pseudo-site image output unit
28 Pseudo-site image capturing image acquisition unit
30 Person attribute estimation device
31 Estimation model storage unit
32 Attribute estimation unit
321 Captured image acquisition unit
322 Face detection unit
323 Face feature extraction unit
324 Attribute calculation unit

**Claims**

1. A person attribute estimation system comprising:

   a camera for capturing an attribute estimation target person, and generating an image;
   an attribute estimation unit for estimating an attribute of a person shown in the image generated by the camera, by using an estimation model;
   an image capturing environment data acquisition unit for acquiring image capturing environment data indicating an image capturing environment of the attribute estimation target person by the camera;
   a standard image acquisition unit for acquiring a standard image that is a person image;
   a pseudo-site image generation unit for generating a pseudo-site image reflecting the image capturing environment in the standard image by processing data of the standard image according to the image capturing environment data; and
   a learning unit for performing learning of the estimation model by using the pseudo-site image.

2. The person attribute estimation system according to claim 1, wherein the learning unit performs learning of the estimation model by using, as learning-use image data, a pseudo-site image capturing image that is obtained by capturing a subject showing the pseudo-site image by the camera in the image capturing environment of the attribute estimation target person by the camera.

3. The person attribute estimation system according to claim 1, wherein the learning unit performs learning of the estimation model by using, as learning-use image data, the pseudo-site image generated by the pseudo-site image generation unit.

4. The person attribute estimation system according to any of claims 1 to 3,
   wherein attribute data indicating an attribute of a person who is a subject is associated with the standard image, and
   wherein the learning unit performs learning of the estimation model by using, as learning-use correct attribute data, attribute data corresponding to the standard image used for generation of the pseudo-site image.

5. The person attribute estimation system according to any of claims 1 to 4, further comprising:

   an image capturing environment estimation unit for calculating the image capturing environment data based on the image generated by the camera,
   wherein the image capturing environment data acquisition unit acquires the image capturing environment data calculated by the image capturing environment estimation unit.

6. The person attribute estimation system according to any of claims 1 to 5,
   wherein the image capturing environment data includes data indicating an illumination state of a location where the attribute estimation target person is to be captured by the camera, and
   wherein the pseudo-site image generation unit generates the pseudo-site image by transforming the standard image

16

according to the data indicating the illumination state.

7. The person attribute estimation system according to any of claims 1 to 6,
   wherein the attribute estimation unit is for estimating an attribute of a person appearing in the image generated by the camera based on a partial image of a face region in the image,
   wherein the image capturing environment data includes data regarding orientation of a face when the attribute estimation target person is captured by the camera,
   wherein the standard image is an image including a face of a person, and
   wherein the pseudo-site image generation unit generates the pseudo-site image by transforming orientation of the face in the standard image according to the data regarding orientation of a face.

8. The person attribute estimation system according to any of claims 1 to 7, wherein the image capturing environment data is image capturing environment data for each of one or more representative person detection regions in the image generated by the camera.

9. The person attribute estimation system according to claim 8,
   wherein the pseudo-site image generation unit generates the pseudo-site image for each of the representative person detection regions by using the image capturing environment data for each of the representative person detection regions,
   wherein the learning unit performs learning of the estimation model for each of the representative person detection regions, and
   wherein the attribute estimation unit estimates an attribute of a person by selecting the estimation model according to a detection position of the person shown in the image generated by the camera.

10. A learning-use data generation device for generating learning-use data to be used in learning of an estimation model, for attribute estimation for a person, which is to be used by a person attribute estimation system including a camera for capturing an attribute estimation target person and generating an image, and an attribute estimation unit for estimating an attribute of a person shown in the image generated by the camera, the learning-use data generation device comprising:

    an image capturing environment data acquisition unit for acquiring image capturing environment data indicating an image capturing environment of the attribute estimation target person by the camera;
    a standard image acquisition unit for acquiring a standard image that is a person image; and
    a pseudo-site image generation unit for generating a pseudo-site image reflecting the image capturing environment in the standard image, by processing data of the standard image according to the image capturing environment data,
    wherein the learning-use data is generated by using the pseudo-site image or a pseudo-site image capturing image that is obtained by capturing a subject showing the pseudo-site image by the camera in an environment where the attribute estimation target person is to be captured by the camera.

11. The learning-use data generation device according to claim 10, wherein the learning-use data includes the pseudo-site image or the pseudo-site image capturing image which is learning-use image data, and attribute data that is correct attribute data for learning-use and that is associated with the standard image that was used in generation of the pseudo-site image.

Figure 1

Figure 2

```
        ┌─────────────┐
        │    START    │
        └──────┬──────┘
               │        S21
        ┌──────▼────────────────┐
        │ ACQUIRE CAPTURED IMAGE │
        └──────┬────────────────┘
               │        S22
        ┌──────▼────────────────┐
        │  CALCULATE IMAGE CAPTURING │
        │    ENVIRONMENT DATA    │
        └──────┬────────────────┘
               │        S23
        ┌──────▼────────────────┐
        │ GENERATE PSEUDO-SITE IMAGE │
        └──────┬────────────────┘
               │        S24
        ┌──────▼────────────────┐
        │        RELEARN         │
        └──────┬────────────────┘
               │        S25
        ┌──────▼────────────────┐
        │   ESTIMATE ATTRIBUTE   │
        └──────┬────────────────┘
               │
        ┌──────▼──────┐
        │     END     │
        └─────────────┘
```

Figure 3A

Figure 3B

Figure 4A

Figure 4B

Figure 5A

| SEX | FEMALE |
| --- | --- |
| AGE | 32 |

Figure 5B

| SEX | MALE |
| --- | --- |
| AGE | 41 |

Figure 5C

Figure 5D

Figure 6

EP 2 854 105 A1

Figure 7

FACE ATTRIBUTE FEATURE
(y: d<<N-DIMENSIONS)

DIMENSION

FACE FEATURE
(x: N-DIMENSIONS)

DIMENSION

Figure 8

```
                    ┌──────────────┐
                    │    START     │
                    └──────┬───────┘
                           │         S81
                           ▼
        ┌──────────────────────────────────────┐
        │    ACQUIRE RELEARNING-USE DATA        │
        └──────────────────┬───────────────────┘
                           │         S82
                           ▼
        ┌──────────────────────────────────────┐
        │        EXTRACT FACE FEATURE           │
        └──────────────────┬───────────────────┘
                           │         S83
                           ▼
        ┌──────────────────────────────────────┐
        │  UPDATE FEATURE SPACE PROJECTION      │
        │             MATRIX W                  │
        └──────────────────┬───────────────────┘
                           │         S84
                           ▼
        ┌──────────────────────────────────────┐
        │    UPDATE ATTRIBUTE ESTIMATION        │
        │           FUNCTION f(x)               │
        └──────────────────┬───────────────────┘
                           │
                           ▼
                    ┌──────────────┐
                    │     END      │
                    └──────────────┘
```

Figure 9

EP 2 854 105 A1

Figure 10

Figure 11

MARKER

FEMALE SAMPLE

MALE SAMPLE

EP 2 854 105 A1

Figure 12

121

INPUT IMAGE
ACQUISITION
UNIT

122

FACE
DETECTION
UNIT

123

FACE
ORIENTATION
ESTIMATION
UNIT

125

STATISTICAL
UNIT

21

IMAGE CAPTURING
ENVIRONMENT DATA
STORAGE UNIT

11

IMAGE
GENERATION
UNIT

<table>
<tr><td colspan="2" align="center">**INTERNATIONAL SEARCH REPORT**</td><td>International application No.<br>PCT/JP2013/003269</td></tr>
</table>

A. CLASSIFICATION OF SUBJECT MATTER
*G06T7/00*(2006.01)i, *G06T1/00*(2006.01)i, *G08B13/196*(2006.01)i, *H04N7/18* (2006.01)i

According to International Patent Classification (IPC) or to both national classification and IPC

B. FIELDS SEARCHED

Minimum documentation searched (classification system followed by classification symbols)
G06T7/00, G06T1/00, G08B13/196, H04N7/18

Documentation searched other than minimum documentation to the extent that such documents are included in the fields searched
Jitsuyo Shinan Koho           1922-1996   Jitsuyo Shinan Toroku Koho   1996-2013
Kokai Jitsuyo Shinan Koho     1971-2013   Toroku Jitsuyo Shinan Koho   1994-2013

Electronic data base consulted during the international search (name of data base and, where practicable, search terms used)
JSTPlus(JDreamIII)

C. DOCUMENTS CONSIDERED TO BE RELEVANT

| Category* | Citation of document, with indication, where appropriate, of the relevant passages | Relevant to claim No. |
|---|---|---|
| A | JP 2011-141740 A (NEC Soft, Ltd., Tokyo Institute of Technology), 21 July 2011 (21.07.2011), paragraphs [0021] to [0039]; fig. 1 to 4 (Family: none) | 1-11 |
| A | JP 2011-070471 A (NEC Soft, Ltd., Tokyo Institute of Technology), 07 April 2011 (07.04.2011), paragraphs [0013] to [0018], [0030] to [0041], [0046] to [0055]; fig. 1 to 9 (Family: none) | 1-11 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 August, 2013 (01.08.13) | 13 August, 2013 (13.08.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="3"><b>INTERNATIONAL SEARCH REPORT</b></td><td>International application No.<br/>PCT/JP2013/003269</td></tr>
</table>

| C (Continuation).   DOCUMENTS CONSIDERED TO BE RELEVANT | | | |
|---|---|---|---|
| Category* | Citation of document, with indication, where appropriate, of the relevant passages | | Relevant to claim No. |
| A | JP 2010-218051 A  (NEC Corp.),<br>30 September 2010 (30.09.2010),<br>paragraphs [0045], [0169], [0170]; fig. 1, 3, 6<br>(Family: none) | | 1-11 |
| A | JP 2006-031103 A  (Toshiba Corp.),<br>02 February 2006 (02.02.2006),<br>paragraph [0040]<br>(Family: none) | | 1-11 |
| A | JP 2005-227794 A  (Matsushita Electric Industrial Co., Ltd.),<br>25 August 2005 (25.08.2005),<br>paragraphs [0031], [0420] to [0423]; fig. 56 to 60<br>& JP 3667332 B      & US 2006/0053014 A1<br>& EP 1564721 A1    & WO 2004/047076 A1<br>& CN 1735924 A     & AU 2003302063 A1 | | 1-11 |
| A | Masashi NISHIYAMA, Osamu YAMAGUCHI, "Face Recognition Using Self Quotient Images based on Classification of Surface Appearance", IEICE Technical Report, 20 October 2005 (20.10. 2005), vol.105, no.374, pages 33 to 38 | | 1-11 |
| A | Mihoko SHIMANO et al., "Face Recognition under Varying Illumination Based on MAP Estimation Incorporating Correlation between Surface Points", Transactions of Information Processing Society of Japan, 15 July 2006 (15. 07.2006), vol.47, no.SIG 10(CVIM 15), pages 162 to 172 | | 1-11 |
| A | Akihiro NAKANOWATARI et al., "Face recognition that is robust against pose and illumination changes", Panasonic Technical Journal, 15 January 2009 (15.01.2009), vol.54, no.4, pages 24 to 29 | | 1-11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012117129 A
- JP 2006323507 A